# FASCICULE DE BREVET EUROPEEN

(11) **EP 4 373 361 B1**
(45) Date de publication et mention de la délivrance du brevet: **11.03.2026**
(21) Numéro de dépôt: 22754119.0
(22) Date de dépôt: 19.07.2022
(51) Int. Cl.: A47J 31/18, A47J 31/06, A47J 31/00

(54) **DISPOSITIF POUR LA PRÉPARATION D'UNE BOISSON CHAUDE OU FROIDE PAR INFUSION D'UN PRODUIT DANS DE L'EAU**
VORRICHTUNG ZUR ZUBEREITUNG EINES HEISSEN ODER KALTEN GETRÄNKS DURCH INFUSION EINES PRODUKTS IN WASSER
DEVICE FOR PREPARING A HOT OR COLD BEVERAGE BY INFUSION OF A PRODUCT IN WATER

(30) Priorité: 22.07.2021 FR 2107917
(43) Date de publication de la demande: 29.05.2024
(73) Titulaire: Stamm, Alban, 67000 Strasbourg (FR)
(72) Inventeur: Stamm, Alban, 67000 Strasbourg (FR)
(74) Mandataire: Germain Maureau
(86) Numéro de dépôt international: PCT/FR2022/051431
(87) Numéro de publication internationale: WO 2023/002116

(56) Documents cités:
- EP-A1- 2 937 023
- EP-A1- 3 415 049
- EP-A2- 2 051 611
- WO-A1-2016/041835
- DE-U1- 29 812 794

## Description

### Domaine technique

La présente invention concerne un dispositif pour la préparation d'une boisson chaude ou froide, par infusion d'un produit dans de l'eau. L'invention trouvera de nombreuses applications et plus particulièrement dans le domaine de l'obtention du thé.

### État de la technique

Il est bien connu de préparer du thé en chauffant un volume d'eau puis en faisant tremper dans ladite eau chaude des feuilles de thé. Les feuilles de thé sont, après infusion, retirées en versant l'eau et les feuilles de thé à travers un filtre, ce dernier retenant lesdites feuilles.

Il est également connu de préparer le thé en chauffant de l'eau, puis en versant l'eau chaude dans une tasse ou similaire, puis en immergeant dans ladite eau chaude un sachet diffuseur contenant des feuilles de thé. Les feuilles de thé libèrent alors leurs arômes, la théine, etc... jusqu'à ce que leur concentration soit à la convenance du consommateur, ce dernier retirant alors le sachet de l'eau pour consommer la boisson ainsi obtenue.

Afin de rendre la préparation du thé plus pratique, on a déjà imaginé des machines pour la préparation du thé ou similaire. C'est le cas notamment des documents EP2937023, EP3415049 et WO2014/006053.

Le document EP2937023 décrit une machine de préparation de thé entièrement automatique, comprenant un ensemble de base et un ensemble de préparation de thé disposé sur l'ensemble de base comportant une pompe à eau pour pomper de l'eau jusque dans l'ensemble de préparation de thé et un moteur, ledit ensemble de préparation de thé comprenant une cavité de préparation de thé avec une partie supérieure ouverte, une partie inférieure fermée et une paroi périphérique fermée, un panier à thé entraîné par ledit moteur au travers de deux embrayages coopérant l'un avec l'autre et une soupape de purge disposé au fond de la cavité de préparation de thé et communiquant avec la cavité de préparation de thé.

Le document EP3415049 décrit une machine automatique de préparation de thé adaptée pour préparer automatiquement du thé dans une chambre de brassage, ladite machine comprenant un dispositif de pression adapté pour comprimer une quantité déterminée de feuilles de thé jusqu'à l'obtention d'un comprimé, séparément de la boisson de thé ainsi préparée. Ce document décrit également un procédé de fonctionnement d'une machine à thé, dans lequel une boisson de thé est préparée avec une quantité de feuilles de thé, et une quantité d'eau dans une chambre de brassage, et dans lequel la quantité de feuilles de thé, une fois la boisson de thé préparée, est comprimée séparément pour former un comprimé.

Le document WO2014/006053 décrit une machine à thé comprenant un boîtier avec une face avant et une face arrière. Une chambre d'infusion et un porte-capsules se trouvent à l'avant de l'appareil. La chambre d'infusion possède un rebord inférieur qui définit une ouverture sur sa face inférieure. La chambre d'infusion peut être munie d'une ouverture sur sa face supérieure, qui est recouverte d'un couvercle amovible, ou elle peut être construite comme un récipient sans ouverture sur sa face supérieure. Le porte-capsules est conçu pour recevoir une capsule. Il est situé dans un support et possède de préférence une poignée. Le porte-capsules est de préférence sensiblement circulaire lorsqu'on le regarde de dessus. La chambre d'infusion est supportée et maintenue en place par un collecteur. Un réservoir d'eau, des moyens de chauffage de l'eau et une pompe se trouvent à l'intérieur du boîtier. L'extrémité inférieure de la face avant du boîtier comprend un plateau sur lequel un gobelet est placé lorsque la boisson est distribuée, un bec verseur étant placé sous le porte-capsules.

Bien que ces machines permettent de préparer facilement et rapidement un thé, elle ne permettent pas de procurer des caractéristiques organoleptiques du thé satisfaisantes. Pour le moins, les caractéristiques organoleptiques du thé ainsi obtenu sont trop éloignées de celles d'un thé préparé conformément à la tradition chinoise quasi millénaire et cela, quel que soit la qualité des feuilles utilisées.

Afin de remédier à cet inconvénient, on a déjà imaginé une machine pour la préparation d'un thé conformément à la tradition chinoise. C'est la cas du brevet européen EP2051611.

Ledit brevet européen EP2051611 décrit un dispositif pour la préparation d'une boisson chaude ou froide, par infusion d'un produit dans de l'eau, comportant une alimentation en eau, des moyens de chauffage pour chauffer l'eau et une unité de pilotage coopérant avec des moyens de détermination de la température à laquelle ledit volume d'eau doit être chauffé et des moyens de détermination du temps d'infusion du produit dans ledit volume d'eau chauffé, et comprenant en outre au moins un infuseur apte à recevoir un volume d'eau déterminé, ledit infuseur comprenant au moins des moyens de retenue du produit à infuser et des moyens d'évacuation de l'infusion. Ledit infuseur est entraîné en mouvement et comporte deux volumes distincts, un premier volume dit volume de chauffage dans lequel s'étendent les moyens de retenue et un second volume dit volume de retenue et d'infusion, le mouvement de l'infuseur permettant de transférer le volume déterminé de l'eau au moins du premier volume vers le second volume puis vers les moyens d'évacuation.

Bien que ce type de dispositif permet la préparation d'un thé conformément à la tradition chinoise et présentant d'excellentes caractéristiques organoleptiques, il présente néanmoins l'inconvénient d'être onéreux à fabriquer, plus particulièrement l'infuseur, ce dernier devant de préférence être en porcelaine. De plus, ce type de dispositif présente également l'inconvénient d'être peu ergonomique notamment pour l'introduction des feuilles de thé dans le volume d'infusion qui nécessite plusieurs manipulation de la coque définissant le volume d'infusion.

On connaît également la demande de brevet WO2017042246 qui décrit une machine à thé commercialisée par la société Vorwerk^{®} sous la marque Temial^{®}.

Ce document décrit une machine à thé, conçue pour la préparation automatique de boissons infusées, avec une chambre d'ébullition ouverte vers le haut, avec une conduite d'amenée d'eau chaude qui est conçue pour introduire de l'eau chaude par le haut dans la chambre d'ébullition et avec un orifice de sortie présent dans la chambre d'ébullition par lequel un liquide peut être évacué de la chambre d'ébullition, l'orifice de sortie étant conçu pour être employé au choix dans une position de distribution ou dans une position d'élimination. Le liquide, évacué de la chambre d'ébullition par l'orifice de sortie, est amené, dans la position de distribution, à un point de distribution de boissons infusées et est amené, dans la position d'élimination, à un écoulement d'eaux usées.

Ce type de dispositif présente l'inconvénient d'être volumineux, encombrant et d'être compliqué à nettoyer de par sa structure. Par ailleurs, dans ce type de dispositif, il n'est pas possible d'utiliser des capsules ou des sachets de thé prédosé(e)s et les feuilles de thé flottent à la surface de l'eau chaude de sorte qu'elles ne sont pas correctement infusées.

### Divulgation de l'invention

L'un des buts de l'invention est donc de remédier à ces inconvénients en proposant un dispositif de conception simple et peu onéreuse, ergonomique et d'entretien aisé, pour la préparation d'une boisson chaude ou froide par infusion, telle que du thé par exemple, avec une grande qualité organoleptique reproduisant le savoir-faire des maîtres du thé.

A cet effet, et conformément à l'invention, il est proposé un dispositif pour la préparation d'une boisson chaude ou froide, par infusion d'un produit dans de l'eau, comprenant au moins une alimentation en eau, des moyens de chauffage pour chauffer l'eau et un infuseur apte à recevoir un volume d'eau déterminé, ledit infuseur comprenant au moins des moyens de retenue du produit à infuser, des moyens d'évacuation de l'infusion, deux volumes distincts, un premier volume dit volume de chauffage et un second volume dit volume de retenue et d'infusion dans lequel s'étendent les moyens de retenue, ledit infuseur étant apte à être entraîné en mouvement au moyen d'un moteur ; ledit dispositif étant remarquable en ce que ledit infuseur est constitué de deux coques, une première coque définissant le premier volume et une seconde coque définissant le second volume, ouvertes et dont les ouvertures s'étendent l'une au droit de l'autre.

De préférence, les bords périphériques des coques définissant les premier et second volumes ne sont pas en contact et sont séparés par un espace déterminé.

Ledit espace déterminé est inférieur ou égal à 5 mm, et de préférence inférieur ou égal à 2 mm.

Selon une variante d'exécution, le dispositif comprend une première couronne solidaire du bord périphérique de la coque définissant le premier volume, ladite couronne comportant un axe de rotation coopérant avec le moteur.

Par ailleurs, il comprend une seconde couronne solidaire du bord périphérique de la coque définissant le second volume et apte à coopérer avec la première couronne pour assurer l'assemblage des deux coques.

Ladite seconde couronne comprend une patte de préhension.

De plus, il comprend un joint solidaire de la première ou de la seconde couronne et assurant l'étanchéité entre les deux coques.

Par ailleurs, les moyens d'évacuation sont positionnés entre les deux coques.

Lesdits moyens d'évacuation consistent en un creux positionné sur le bord périphérique de la coque définissant le second volume.

Selon une variante d'exécution, lesdites coques présentent une forme sensiblement hémisphérique ou hémi-ovoïdale.

Selon une autre variante d'exécution, lesdites coques présentent une forme sensiblement parallélépipédique.

Selon une autre variante d'exécution, la coque formant le premier volume dit de chauffage se présente sous la forme d'un couvercle.

Par ailleurs, la coque définissant le premier volume comporte un axe de rotation coopérant avec le moteur, ledit axe de rotation comportant une conduite dite d'alimentation débouchant dans ledit premier volume et connectée fluidiquement aux moyens de chauffage.

De plus, les moyens de chauffage consistent en une chaudière comprenant une résistance thermique, une conduite d'alimentation en eau, une conduite d'évacuation et une conduite de mise à la pression atmosphérique dans laquelle un piston est apte à être déplacé depuis une position ouverte à une position fermée.

Selon une variante d'exécution, les moyens de chauffage consistent en une chaudière comprenant au moins un corps ouvert à son extrémité supérieure, une résistance thermique, une conduite d'alimentation en eau, une conduite d'évacuation et une membrane souple et élastique fermant l'extrémité supérieure du corps de la chaudière dont l'extrémité inférieure est fermée.

De manière avantageuse, les moyens de chauffage comprennent une seconde membrane souple et élastique coiffant la première membrane.

Accessoirement, les moyens de chauffage comprennent, entre la première membrane souple et élastique et la seconde membrane souple et élastique, des moyens dits lubrifiants et/ou isolants permettant d'éviter une adhésion entre les deux membranes et de procurer un glissement relatif entre lesdites membranes.

Par ailleurs, la coque définissant le premier volume comporte au moins une boursoufflure s'étendant parallèlement au plan du bord périphérique de ladite coque.

De préférence, la coque définissant le premier volume comporte deux boursoufflures s'étendant de part et d'autre du plan sagittal de la coque.

Par ailleurs, la coque définissant le second volume comporte quatre épaulements s'étendant, par paires, de part et d'autre du plan sagittal et du plan frontal de la coque et sur lesquels prend appui une grille de retenue du produit à infuser.

De plus, le dispositif comporte des moyens de blocage de la grille de retenue.

Lesdits moyens de blocage consistent en une lame ou une corde flexible recourbée dont une première extrémité est solidaire de la couronne de la coque définissant le premier volume ou solidaire de l'axe de rotation de la coque et dont l'extrémité opposée prend appui sur la grille de retenue lorsque les coques sont assemblées.

Selon une variante d'exécution, lesdits moyens de blocage consistent en une lame ou une corde flexible recourbée dont une première extrémité prend appui sur ou est solidaire de la coque définissant le premier volume, lorsque les coques sont assemblées, et dont l'extrémité opposée est solidaire de ou prend appui sur la grille de retenue.

De manière avantageuse, le dispositif comprend une unité de pilotage coopérant avec des moyens de détermination de la température à laquelle ledit volume d'eau doit être chauffé et des moyens de détermination du temps d'infusion du produit dans ledit volume d'eau chauffé.

### Brève description des dessins

D'autres avantages et caractéristiques ressortiront mieux de la description qui va suivre de plusieurs variantes d'exécution, données à titre d'exemples non limitatifs, du dispositif pour la préparation d'une boisson chaude ou froide par infusion d'un produit dans de l'eau conforme à l'invention, en référence aux dessins annexés sur lesquels :
[Fig. 1] est une vue en perspective du dispositif suivant l'invention,
[Fig. 2] est une vue en perspective éclatée du dispositif suivant l'invention représenté sur la figure 1,
[Fig. 3] est une vue éclatée en coupe sagittale du dispositif suivant l'invention représenté sur la figure 1,
[Fig. 4] est une vue en coupe sagittale du dispositif suivant l'invention représenté sur la figure 1,
[Fig. 5] est une vue en coupe sagittale de l'infuseur du dispositif suivant l'invention représenté sur les figures 1 à 4,
[Fig. 6] est une vue en coupe frontale de l'infuseur du dispositif suivant l'invention représenté sur les figures 1 à 4,
[Fig. 7] est une vue en perspective éclatée de la chaudière du dispositif suivant l'invention,
[Fig. 8] est une vue en coupe sagittale de la chaudière du dispositif suivant l'invention, [Fig. 9] est une vue en perspective d'une variante d'exécution du dispositif suivant l'invention,
[Fig. 10] est une vue en coupe sagittale de la seconde variante d'exécution du dispositif suivant l'invention représentée sur la figure 9,
[Fig. 11] est une représentation schématique de la gestion connectée du dispositif suivant l'invention.

### Mode de réalisation de l'invention

Dans la suite de la description du dispositif pour la préparation d'une boisson chaude ou froide par infusion d'un produit dans de l'eau suivant l'invention, les mêmes références numériques désignent les mêmes éléments. Les différentes vues ne sont pas nécessairement tracées à l'échelle. Le dispositif suivant l'invention est particulièrement destiné à la préparation de thé ; Toutefois, le dispositif pourra être utilisé pour la préparation d'une boisson chaude ou froide par infusion d'un produit quelconque dans de l'eau sans pour autant sortir du cadre de l'invention.

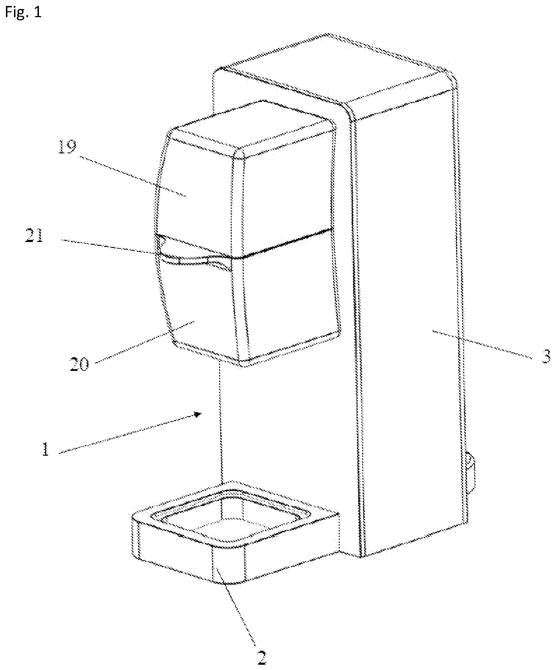

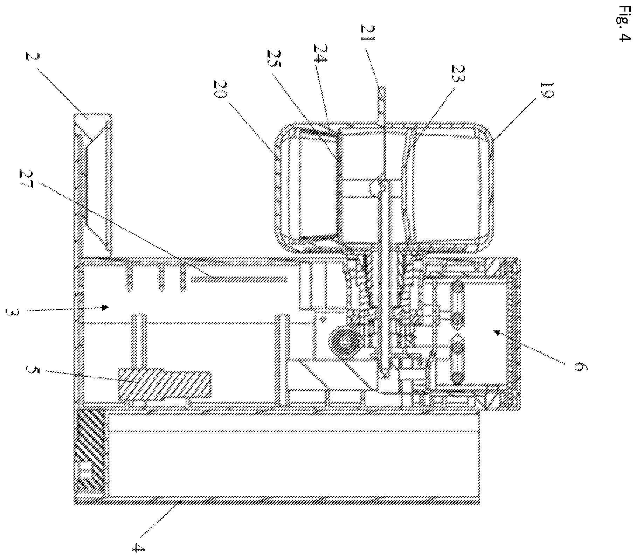

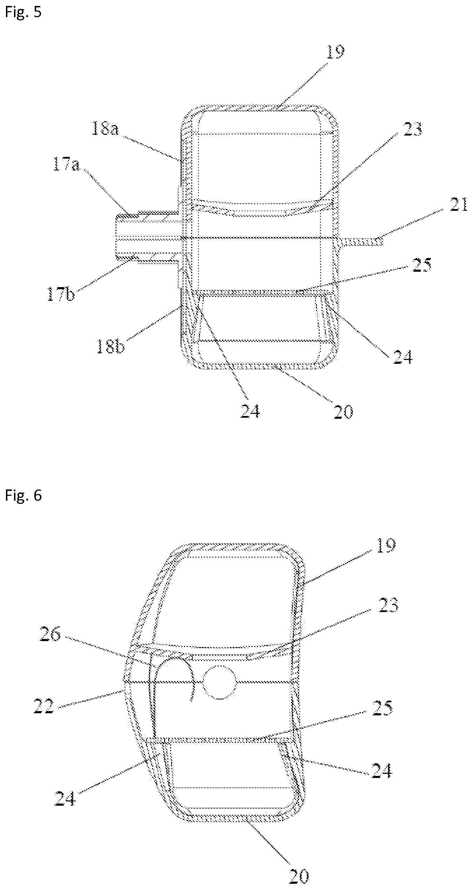

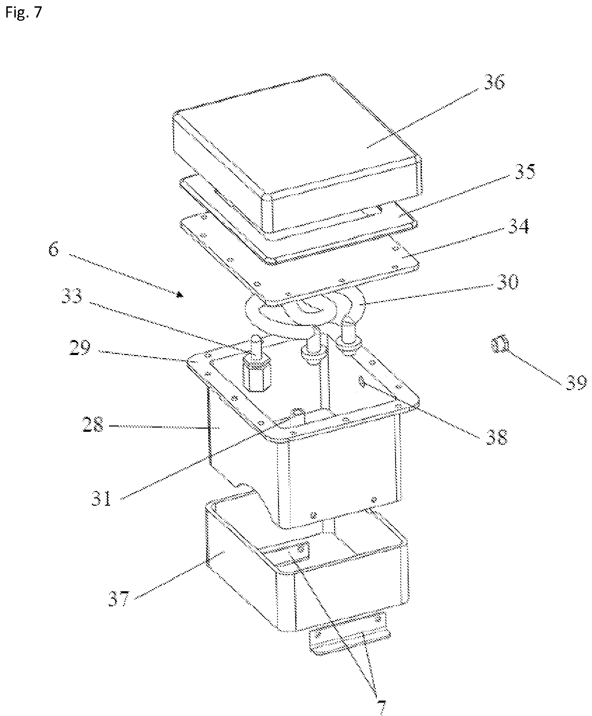

Le dispositif suivant l'invention, en référence aux figures 1 à 8, est constitué d'une embase 1 formant socle et se prolongeant par un support creux 2 sur lequel est posée une grille, non représentée sur les figures, formant support pour une tasse ou tout autre contenant similaire. Ladite embase 1 porte également un carter vertical 3, de forme sensiblement parallélépipédique, constitué de deux parties 3a et 3b.

Le dispositif comporte également un réservoir d'eau 4 sensiblement parallélépipédique s'étendant verticalement le long de la face arrière du carter 3. L'extrémité inférieure dudit réservoir d'eau 4 comporte une valve connectée par une conduite flexible, non représentées sur les figures, à une pompe 5, telle qu'une pompe rotative ou similaire, ladite pompe 5 alimentant au moyen d'une conduite souple, non représentée sur les figures, une chaudière 6 s'étendant à l'extrémité supérieure, et à l'intérieur, du carter 3, l'extrémité supérieure de la chaudière 6 fermant l'extrémité supérieure du carter 3. Ladite chaudière 6 comprend à son extrémité inférieure des pattes latérales 7 aptes à coulisser dans des glissières 8 formées dans les parois intérieures des deux parties 3a et 3b du carter 3, à proximité de leurs extrémités supérieures.

Par ailleurs, le dispositif comporte un moteur électrique 9 entraînant une vis sans fin 10 coopérant avec une roue dentée 11, le moteur électrique 9 étant solidaire d'une plaque support 12. Ladite roue dentée 11 est solidaire d'une pièce d'accouplement 13 coopérant avec un axe cylindrique 14 montée sur deux paliers 15 et 16, chaque palier 15 et 16 consistant en un roulement à billes.

Par ailleurs, ledit axe cylindrique 14 reçoit avec emboîtement un manchon constitué de deux parties 17a,17b sensiblement hémicylindriques, chacune des parties 17a,17b étant solidaire d'une platine 18a et 18b respectivement qui est solidarisée à une première coque 19 de forme parallélépipédique définissant un premier volume dit de chauffage et respectivement à une seconde coque 20 de forme également parallélépipédique et définissant un volume de retenue et d'infusion, la seconde coque 20 s'étendant en dessous de la première coque 19 au droit de cette dernière. Lesdites coques 19,20 sont de préférence obtenues dans de la porcelaine ou de la terre cuite afin de retenir les tanins du thé notamment. Toutefois, il va de soi que les coques 19,20 pourront être obtenues dans tout autre matériau compatible avec les normes alimentaires tel que du verre par exemple sans pour autant sortir du cadre de l'invention. On notera que les coques 19 et 20 pourront être respectivement obtenues dans deux matériaux différents sans pour autant sortir du cadre de l'invention. Ainsi, les coques 19,20 sont ouvertes et s'étendent l'une au droit de l'autre, les dimensions desdites coques 19,20 étant sensiblement égales. Dans cet exemple particulier de réalisation, les bords périphériques des coques 19 et 20 définissant les premier et second volumes respectivement ne sont pas en contact et sont séparés par un espace inférieur ou égal à 5mm, et de préférence inférieur ou égal à 2mm. Par ailleurs, par construction, lesdites coques 19 et 20 sont amovibles par rapport à l'axe cylindrique 14.

Il va de soi que les bords périphériques des coques 19 et 20 pourront être en contact ou ne pas être en contact en étant séparés par un espace supérieur à 2mm sans pour autant sortir du cadre de l'invention.

Afin de faciliter la préhension de la seconde coque 20, cette dernière comporte une patte de préhension 21.

De plus, l'infuseur formé par les deux coques 19,20 comprend des moyens d'évacuation de la boisson infusé. Lesdits moyens d'évacuation sont positionnés entre les deux coques 19,20 et consistent en une ouverture telle qu'un creux 22, sensiblement en forme de V ou similaire, positionné sur la coque 20 telle que sur le bord périphérique de la coque 20 définissant le second volume, dans le plan frontal de ladite coque 20.

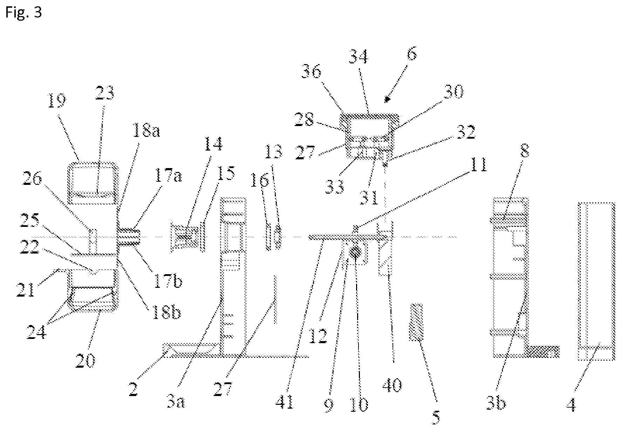

En référence aux figures 3 à 6, afin de permettre une circulation optimale de l'eau dans l'infuseur, la coque 19 définissant le premier volume comporte au moins une boursouflure 23 s'étendant sensiblement parallèlement au plan du bord périphérique de ladite coque 19. Dans cet exemple particulier de réalisation, ladite boursouflure 23 est constituée d'une paroi inclinée vers la coque 20 définissant le second volume et muni d'une ouverture centrale à son extrémité inférieure.

Il va de soi que la coque 19 définissant le premier volume pourra comporter deux ou plusieurs boursouflures 23 ou parois inclinées s'étendant de part et d'autre du plan sagittal de la coque 19, le plan sagittal consistant en le plan vertical contenant l'axe de rotation de l'infuseur, sans pour autant sortir du cadre de l'invention.

De plus, la coque 20 définissant le second volume comporte au moins deux épaulements et idéalement quatre épaulements 24 s'étendant, par paires, de part et d'autre du plan sagittal et du plan frontal de la coque 20 et sur lesquels prend appui une grille de retenue 25 du produit à infuser. Ladite grille 25 est obtenue dans du métal, présente une forme sensiblement carrée ou rectangulaire et comporte des trous et/ou des fentes de dimensions inférieures aux dimensions du produit à infuser qui est placé sous ladite grille de retenue 25. Afin de maintenir ladite grille de retenue 25 en position, le dispositif comporte également des moyens de blocage de la grille de retenue 25. Ces derniers consistent en une lame flexible 26 recourbée dont une première extrémité prend appui sur la coque 19 définissant le premier volume ou l'axe 14, lorsque les coques 19,20 sont assemblées, et dont l'extrémité opposée est solidaire de la grille de retenue 25.

Il est bien évident que la lame flexible 26 pourra être substituée par une corde flexible telle qu'une corde métallique par exemple, et que la première extrémité de la lame flexible 26 pourra être solidaire de l'axe 14 et/ou de la coque 19, au lieu de prendre appui sur la coque 19, et dont l'extrémité opposée pourra prendre appui sur la grille de retenue 25, sans pour autant sortir du cadre de l'invention.

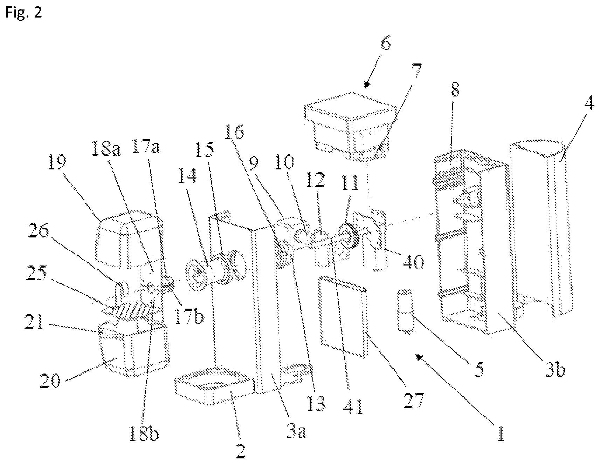

Par ailleurs, en référence aux figures 2 à 4, le dispositif suivant l'invention comporte également une unité de pilotage 27 connectée à un capteur du niveau d'eau du réservoir et à un capteur de température de la chaudière 6 comme il sera détaillé plus loin. Ladite unité de pilotage 27 est, par ailleurs, connectée à la pompe 5, à une électrovanne 40, à une résistance thermique 30 pour chauffer l'eau, et au moteur d'entraînement 9 des coques 19,20 afin de les piloter comme il sera détaillé plus loin. Cette unité de pilotage 27 comprend d'une part une unité de mémoire dans laquelle sont enregistrées des informations relatives aux feuilles de thé placées dans la seconde coque 20 sous la grille de retenue 25 et d'autre part un système micro-programmé tel qu'un microprocesseur, ou un microcontrôleur, connecté à l'unité de mémoire, et dans lequel sont enregistrés des algorithmes constituant des moyens de détermination de la température à laquelle le volume d'eau doit être chauffé et des moyens de détermination du temps d'infusion du produit dans ledit volume d'eau chauffé.

Il est bien évident que l'unité de mémoire de l'unité de pilotage 27 pourra être externalisée, par exemple, dans un smartphone et/ou dans le « cloud » sans pour autant sortir du cadre de l'invention.

Accessoirement, le dispositif pourra également comporter un écran d'affichage et des boutons pour afficher et/ou sélectionner des informations relatives notamment aux feuilles de thé, aux nombres d'infusion à réaliser, aux types d'infusions à réaliser, etc.

De plus, en référence aux figures 2 à 4, 7 et 8, les moyens de chauffage consistent en une chaudière 6 comprenant au moins un corps parallélépipédique 28 fermé à son extrémité inférieur et ouvert à son extrémité supérieure, l'extrémité supérieure dudit corps 28 comprenant un épaulement périphérique 29 s'étendant vers l'extérieur, une résistance thermique 30 s'étendant à l'intérieur dudit corps 28 et connecté à l'unité de pilotage 27, une conduite d'alimentation en eau 31, une conduite d'évacuation 32, un capteur de température 33 connecté à l'unité de pilotage 27, une première membrane souple et élastique 34 fermant l'extrémité supérieure du corps 28 de la chaudière 6 au moyen d'un cadre 35 vissé sur l'épaulement périphérique 29, et une seconde membrane souple et élastique 36 coiffant l'épaulement 29, la première membrane 34 et le cadre 35. Par ailleurs, le corps parallélépipédique 28 est positionné dans une chemise 37 également parallélépipédique permettant d'isoler le corps 28 du reste des éléments du dispositif, les pattes latérales 7 étant fixées audit corps parallélépipédique dans sa partie inférieure. Accessoirement, le corps 28 comprend un trou 38 recevant une soupape de sécurité 39 en cas de surpression dans la chaudière. Ainsi, lorsque l'eau est introduite dans le corps 28 de la chaudière 6 au moyen de la pompe 5, l'électrovanne 40 étant en position fermée, la première membrane 34 se déforme et maintient l'eau dans la chaudière à une pression supérieure à la pression atmosphérique, la seconde membrane 36 se déformant également sous l'action mécanique de la première membrane 34. Ainsi, le chauffage de l'eau s'effectue plus rapidement et la membrane 34 continue de se déformer lorsque l'eau est chauffée jusqu'à atteindre sa déformation maximale. L'eau étant alors chauffée et sous pression maximale, elle s'évacue rapidement de la chaudière 6 à travers la conduite d'évacuation 32 fluidiquement connectée à une électrovanne 40 dont la sortie est fluidiquement connectée à une conduite rigide 41 passant à travers l'axe de la roue dentée 11 et l'axe cylindrique 14, débouchant entre les deux coques 19,20 de l'infuseur, ladite électrovanne 40 étant connectée à l'unité de pilotage 27. Le trou d'évacuation positionné à l'extrémité libre de la conduite rigide 41 est orienté vers le bas, en direction de l'intérieur de la coque 19 ou de la coque 20, en fonction de la position de l'infuseur 19,20. On notera que, accessoirement, la conduite rigide 41 procure un guidage de la partie 17b du manchon dans l'axe cylindrique 14 lors de la mise en place de la coque 20 sous la coque 19.

De manière avantageuse, les moyens de chauffage pourront comprendre, entre la première membrane souple et élastique 34 et la seconde membrane souple et élastique 36, des moyens dits lubrifiants et/ou isolants permettant d'éviter une adhésion entre les deux membranes 34 et 36 et de procurer un glissement relatif entre lesdites membranes 34 et 36. Ces moyens lubrifiants et/ou isolants, non représentés sur les figures, pourront consister en un film en téflon^{®} ou en un film de talc ou de graisse ou tout autre moyen similaire bien connu de l'homme du métier.

Selon une variante d'exécution, non représentée sur les figures, l'infuseur constitué des deux coques 19 et 20 pourra comprendre une première couronne solidaire du bord périphérique de la coque 19 définissant le premier volume, ladite couronne comportant un axe de rotation coopérant avec le moteur, et une seconde couronne solidaire du bord périphérique de la coque 20 définissant le second volume et apte à coopérer avec la première couronne pour assurer l'assemblage des deux coques 19 et 20. Par ailleurs, la seconde couronne comprend une patte de préhension. Accessoirement, l'infuseur pourra comprendre un joint solidaire de la première ou de la seconde couronne afin d'assurer l'étanchéité entre les deux coques 19 et 20.

On expliquera maintenant le fonctionnement du dispositif.

De l'eau étant préalablement introduite dans le réservoir d'eau 4 et des feuilles de thé étant placées dans la seconde coque 20 sous la grille 25, la coque 20 est placée par emboîtement sur l'axe 14 de sorte que la lame flexible 26 bloque la grille 25, puis l'utilisateur sélectionne sur l'interface, la nature des feuilles introduite (thé vert, noir, blanc, etc.), le nombre de tasses (1 tasse par défaut, 1/2 théière = 2 tasses et 1 théière = 4 tasses). L'unité de pilotage 27 détermine alors au moins la température et le temps d'infusion.

Il convient de noter que l'utilisateur pourra également sélectionner lui-même la température et la durée d'infusion en fonction des goûts personnels en appuyant sur les boutons de l'interface.

L'unité de pilotage 27 actionne alors l'électrovanne 40 pour la mettre en position fermée ainsi que la pompe 5 pour amener entre 150 ml et 200 ml d'eau dans la chaudière 6 puis pilote la résistance thermique 30 pour chauffer l'eau jusqu'à la température de consigne déterminée par ladite unité de pilotage 27.

L'infuseur est entraîné en rotation autour de son axe 14 de telle sorte que la seconde coque 20 contenant les feuilles de thé s'étendent au-dessus de la première coque 19 puis l'eau préalablement chauffée dans la chaudière 6, à la température de consigne déterminée par l'unité de pilotage 27, est introduite rapidement dans la première coque 19 à travers la conduite 41 passant à travers l'axe 14 en actionnant l'électrovanne 40 en position ouverte. L'eau chaude n'est alors pas en contact avec les feuilles de thé.

L'infuseur 19,20 est alors entraîné en rotation autour de son axe 14, suivant une rotation de 180°, de telle manière que l'eau chaude, guidée par la boursouflure 23, soit versée dans la seconde coque 20 contenant les feuilles de thé. On notera que la rotation de l'infuseur 19,20 et le déversement de l'eau chaude procure une aération de l'eau et une agitation favorisant un mélange homogène des feuilles de thé dans l'eau. De plus, l'infuseur pourra subir des rotations alternées de faibles amplitudes, procurant de préférence un mouvement pendulaire à l'infuseur, pendant la durée de l'infusion, favorisant ainsi la réalisation d'un mélange parfaitement homogène.

Lorsque la durée de l'infusion est terminée, l'infuseur est une nouvelle fois entraîné en rotation autour de son axe 14, suivant une rotation de -90°, pour évacuer l'infusion par le trou d'évacuation 22 qui se situe alors au point le plus bas de l'infuseur 19,20 et au droit de la tasse, ou de tout autre contenant, placée sur la grille du support 2. Les feuilles de thé restent dans la coque 20, retenus par la grille de retenue 25 en appui sur les quatre épaulements 24.

Il va de soi que le réservoir d'eau peut être substitué par une alimentation en eau continue par le réseau d'eau courante par exemple, le capteur de niveau étant alors substitué par un débitmètre par exemple.

Par ailleurs, on notera que les feuilles de thé pourront être conditionnées dans un sachet, ledit sachet étant placé sous la grille de retenue 25.

De plus, le dispositif peut comprendre des moyens de lecture d'un code d'identification de la quantité et/ou de la nature des feuilles de thé placées dans la seconde coque 20, lesdits moyens de lecture étant connectés à l'unité de pilotage 27. Le code d'identification peut consister en tout code d'identification bien connu de l'Homme du Métier tel qu'un code-barres, une puce électronique, un code magnétique ou optique, une impression en relief ou en creux par exemple, les moyens de lecture consistant en un lecteur optique, magnétique, électronique, mécanique ou similaire.

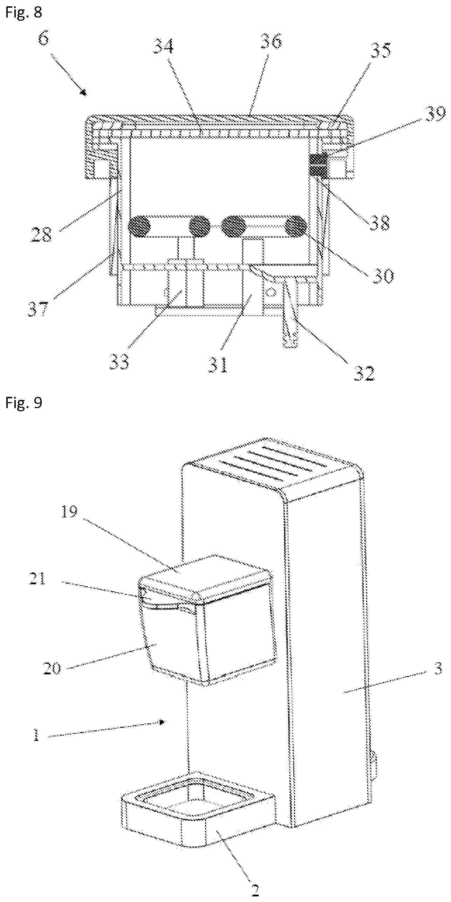

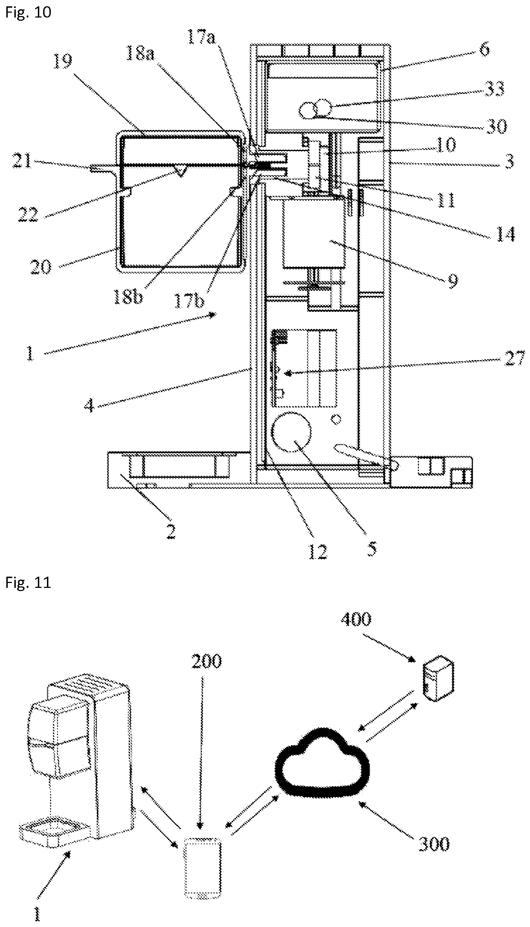

Selon une variante d'exécution du dispositif suivant l'invention, en référence aux figures 9 et 10, le dispositif suivant l'invention est constitué de la même manière que précédemment d'une embase 1 formant socle et se prolongeant par un support creux 2 sur lequel est posé une grille formant support pour une tasse ou tout autre contenant similaire. Ladite embase 1 porte également un carter vertical 3, de forme sensiblement parallélépipédique.

Le dispositif comporte également un réservoir d'eau sensiblement parallélépipédique, non représenté sur les figures, s'étendant verticalement le long de la face arrière du carter 3. L'extrémité inférieure dudit réservoir d'eau comporte une valve connectée par une conduite flexible, non représentée sur les figures, à une pompe rotative 5, ladite pompe 5 alimentant au moyen d'une conduite souple, non représentée sur les figures, une chaudière 6 s'étendant à l'extrémité supérieure, et à l'intérieur, du carter 3. Ladite chaudière 6 est solidaire dudit carter 3 et comporte, de manière usuelle, un capteur de température 33 et des moyens de chauffage 30 tels qu'une thermorésistance par exemple. Ladite chaudière 6 est identique à celle décrite dans la variante d'exécution précédente, l'eau s'évacuant rapidement de la chaudière 6 à travers une conduite d'évacuation fluidiquement connectée à une électrovanne dont la sortie est fluidiquement connectée à une conduite rigide passant à travers l'axe de la roue dentée et l'axe cylindrique, débouchant entre les deux coques 19,20 de l'infuseur, la conduite d'évacuation, l'électrovanne et la conduite rigide n'étant pas représentés sur les figures 9 et 10.

Par ailleurs, le dispositif comporte un moteur électrique 9 entraînant une vis sans fin 10 coopérant avec une roue dentée 11, le moteur électrique 9 étant solidaire d'une plaque support 12. Ladite roue dentée 11 est solidaire d'un axe cylindrique 14 monté sur deux paliers, non représentés sur les figures, chaque palier consistant en un roulement à billes.

Par ailleurs, ledit axe cylindrique 14 reçoit avec emboîtement un manchon constitué de deux parties 17a,17b sensiblement hémicylindriques, chacune des parties 17a,17b étant solidaire d'une platine 18a et 18b respectivement qui est solidarisée à une première coque 19 de forme parallélépipédique et respectivement à une seconde coque 20 de forme également parallélépipédique et définissant un volume de retenue et d'infusion, la seconde coque 20 s'étendant en dessous de la première coque 19 au droit de cette dernière. Ainsi, les coques 19,20 sont ouvertes et s'étendent l'une au droit de l'autre, les dimensions des ouvertures desdites coques 19,20 étant sensiblement égales. Dans cet exemple particulier de réalisation, les bords périphériques des coques 19 et 20 définissant les premier et second volumes respectivement ne sont pas en contact et sont séparés par un espace inférieur ou égal à 5 millimètres, et de préférence inférieur ou égal à 2 millimètres.

Afin de faciliter la préhension de la seconde coque 20, cette dernière comporte une patte de préhension 21.

De plus, l'infuseur formé par les deux coques 19,20 comprend de la même manière que précédemment des moyens d'évacuation de la boisson infusé. Lesdits moyens d'évacuation sont positionnés entre les deux coques 19,20 et consistent en un creux 22 positionné sur le bord périphérique de la coque 20 définissant le second volume, dans le plan frontal de ladite coque 20.

Ledit infuseur 19,20 se distingue de celui décrit précédemment par le fait que la première coque 19 de forme parallélépipédique définissant le premier volume dit de chauffage est aplatie et se présente sous la forme d'un couvercle parallélépipédique. De plus, la coque parallélépipédique 19 définissant le premier volume est solidaire d'un axe de rotation coopérant avec le moteur 9, ledit axe de rotation comportant une conduite dite d'alimentation connectée fluidiquement aux moyens de chauffage et débouchant directement dans le second volume formé par la coque 20.

Accessoirement, en référence à la figure 11, le dispositif pourra avantageusement être piloté au moyen d'un smartphone 200 apte à communiquer avec l'unité de pilotage 27 par une liaison Wi-Fi ou Bluetooth par exemple, ledit smartphone 200 comportant une application dédiée. Ladite application sera avantageusement apte à permettre la commande de « capsules » de thé, ou de thé en vrac en fonction de la consommation de l'utilisateur à travers une connexion internet 300 sur un ou plusieurs sites internet (sites marchands) hébergé sur un serveur web 400.

Par ailleurs, il va de soi que lesdites coques 19 et 20 formant l'infuseur pourront présenter des formes sensiblement hémisphériques ou hémi-ovoïdales ou toutes autres formes sans pour autant sortir du cadre de l'invention.

De plus, il est bien évident que la chaudière 6 pourra être utilisé pour des machines à café ou similaire sans sortir du cadre de l'invention.

Enfin, il est bien évident que les exemples que l'on vient de donner ne sont que des illustrations particulières en aucun cas limitatives quant aux domaines d'application de l'invention.

## Revendications

1. Dispositif pour la préparation d'une boisson chaude ou froide, par infusion d'un produit dans de l'eau, comprenant au moins une alimentation en eau, des moyens de chauffage (6) pour chauffer l'eau et un infuseur (19,20) apte à recevoir un volume d'eau déterminé, ledit infuseur (19,20) comprenant au moins des moyens de retenue (24,25) du produit à infuser, des moyens d'évacuation (22) de l'infusion, deux volumes distincts, un premier volume dit volume de chauffage et un second volume dit volume de retenue et d'infusion dans lequel s'étendent les moyens de retenue (24,25), ledit infuseur (19,20) étant apte à être entraîné en mouvement au moyen d'un moteur (9), **caractérisé en ce que** ledit infuseur (19,20) est constitué de deux coques, une première coque (19) définissant le premier volume et une seconde coque (20) définissant le second volume, ouvertes et dont les ouvertures s'étendent l'une au droit de l'autre.

2. Dispositif suivant la revendication 1 **caractérisé en ce que** les bords périphériques des coques (19,20) définissant les premier et second volumes ne sont pas en contact et sont séparés par un espace déterminé.

3. Dispositif suivant la revendication 2 **caractérisé en ce que** ledit espace déterminé est inférieur ou égal à 5mm.

4. Dispositif suivant la revendication 3 **caractérisé en ce que** ledit espace déterminé est inférieur ou égal à 2mm.

5. Dispositif suivant l'une quelconque des revendications 1 à 4 **caractérisé en ce que** les moyens d'évacuation (22) sont positionnés entre les deux coques (19,20).

6. Dispositif suivant la revendication 5 **caractérisé en ce que** lesdits moyens d'évacuation (22) consistent en un creux (22) positionné sur le bord périphérique de la coque (20) définissant le second volume.

7. Dispositif suivant l'une quelconque des revendications 1 à 6 **caractérisé en ce que** lesdites coques (19,20) présentent une forme sensiblement parallélépipédique.

8. Dispositif suivant la revendication 7 **caractérisé en ce que** la coque (19) formant le premier volume dit de chauffage se présente sous la forme d'un couvercle.

9. Dispositif suivant l'une quelconque des revendications 1 à 8 **caractérisé en ce que** les moyens de chauffage (6) consistent en une chaudière (6) comprenant au moins un corps (28) ouvert à son extrémité supérieure, une résistance thermique (30), une conduite d'alimentation en eau (31), une conduite d'évacuation (32) et une membrane souple et élastique (34) fermant l'extrémité supérieure du corps (28) de la chaudière (6) dont l'extrémité inférieure est fermée.

10. Dispositif suivant la revendication 9 **caractérisé en ce que** les moyens de chauffage (6) comprennent une seconde membrane souple et élastique (36) coiffant la première membrane (34).

11. Dispositif suivant la revendication 10 **caractérisé en ce que** les moyens de chauffage (6) comprennent, entre la première membrane souple et élastique (34) et la seconde membrane souple et élastique (36), des moyens dits lubrifiants et/ou isolants permettant d'éviter une adhésion entre les deux membranes (34,36) et de procurer un glissement relatif entre lesdites membranes (34,36).

12. Dispositif suivant l'une quelconque des revendications 1 à 11 **caractérisé en ce que** la coque (19) définissant le premier volume comporte au moins une boursoufflure ou une paroi inclinée (23) vers la coque (20) définissant le second volume et muni d'une ouverture centrale à son extrémité inférieure.

13. Dispositif suivant l'une quelconque des revendications 1 à 12 **caractérisé en ce que** la coque (20) définissant le second volume comporte quatre épaulements (24) s'étendant, par paires, de part et d'autre du plan sagittal et du plan frontal de la coque (20) et sur lesquels prend appui une grille de retenue (25) du produit à infuser.

14. Dispositif suivant la revendication 13 **caractérisé en ce qu'**il comporte des moyens de blocage de la grille de retenue (25).

15. Dispositif suivant la revendication 14 **caractérisé en ce que** lesdits moyens de blocage consistent en une lame ou une corde flexible (26) recourbée dont une première extrémité est solidaire de ou prend appui sur la coque (19) définissant le premier volume, lorsque les coques (19,20) sont assemblées, et dont l'extrémité opposée prend appui sur ou est solidaire de la grille de retenue (25).

## Patentansprüche

1. Vorrichtung zur Zubereitung eines warmen oder kalten Getränks durch Aufbrühen eines Produkts im Wasser, die mindestens eine Wasserversorgung, Heizmittel (6) zum Erhitzen des Wassers und eine Brüheinheit (19, 20), die imstande ist, ein bestimmtes Wasservolumen aufzunehmen, umfasst, wobei die Brüheinheit (19, 20) mindestens Rückhaltemittel (24, 25) für das aufzubrühende Produkt umfasst, Ablassmittel (22) für das Aufgebrühte und zwei getrennte Volumina, ein erstes, Heizvolumen genanntes, Volumen, und ein zweites, Rückhalte- und Aufbrühvolumen genanntes, Volumen, in dem sich die Rückhaltemittel (24, 25) erstrecken, wobei die Brüheinheit (19, 20) imstande ist, mittels eines Motors (9) in Bewegung angetrieben zu werden, **dadurch gekennzeichnet, dass** die Brüheinheit (19, 20) aus zwei Schalen, einer ersten Schale (19), die das erste Volumen definiert, und einer zweiten Schale (20), die das zweite Volumen definiert, besteht, die offen sind und deren Öffnungen sich auf gleicher Höhe zueinander erstrecken.

2. Vorrichtung nach Anspruch 1, **dadurch gekennzeichnet, dass** die Umfangsränder der Schalen (19, 20), die das erste und zweite Volumen definieren, nicht in Kontakt miteinander sind und durch einen bestimmten Raum getrennt sind.

3. Vorrichtung nach Anspruch 2, **dadurch gekennzeichnet, dass** der bestimmte Raum kleiner oder gleich 5 mm ist.

4. Vorrichtung nach Anspruch 3, **dadurch gekennzeichnet, dass** der bestimmte Raum kleiner oder gleich 2 mm ist.

5. Vorrichtung nach einem der Ansprüche 1 bis 4, **dadurch gekennzeichnet, dass** die Ablassmittel (22) zwischen den beiden Schalen (19, 20) positioniert sind.

6. Vorrichtung nach Anspruch 5, **dadurch gekennzeichnet, dass** die Ablassmittel (22) aus einer Vertiefung (22) bestehen, die am Umfangsrand der Schale (20) positioniert ist, die das zweite Volumen definiert.

7. Vorrichtung nach einem der Ansprüche 1 bis 6, **dadurch gekennzeichnet, dass** die Schalen (19, 20) eine im Wesentlichen quaderförmige Form aufweisen.

8. Vorrichtung nach Anspruch 7, **dadurch gekennzeichnet, dass** die Schale (19), die das erste Heizvolumen genannte Volumen bildet, sich in Form eines Deckels präsentiert.

9. Vorrichtung nach einem der Ansprüche 1 bis 8, **dadurch gekennzeichnet, dass** die Heizmittel (6) aus einem Kessel (6) bestehen, der mindestens einen an seinem oberen Ende offenen Körper (28), einen thermischen Widerstand (30), eine Wasserversorgungsleitung (31), eine Ablassleitung (32) und eine weiche und elastische Membran (34) umfasst, die das obere Ende des Körpers (28) des Kessels (6) verschließt, dessen unteres Ende geschlossen ist.

10. Vorrichtung nach Anspruch 9, **dadurch gekennzeichnet, dass** die Heizmittel (6) eine zweite weiche und elastische Membran (36) umfassen, welche die erste Membran (34) bedeckt.

11. Vorrichtung nach Anspruch 10, **dadurch gekennzeichnet, dass** die Heizmittel (6) zwischen der ersten weichen und elastischen Membran (34) und der zweiten weichen und elastischen Membran (36) Schmier- und/oder Isoliermittel genannte Mittel umfassen, die es ermöglichen, ein Anhaften zwischen den beiden Membranen (34, 36) zu vermeiden und ein Gleiten zwischen den Membranen (34, 36) zueinander zu vermitteln.

12. Vorrichtung nach einem der Ansprüche 1 bis 11, **dadurch gekennzeichnet, dass** die Schale (19), die das erste Volumen definiert, mindestens eine Schwellung oder eine zur Schale (20) hin geneigte Wand (23) beinhaltet, die das zweite Volumen definiert und mit einer zentralen Öffnung an ihrem unteren Ende versehen ist.

13. Vorrichtung nach einem der Ansprüche 1 bis 12, **dadurch gekennzeichnet, dass** die Schale (20), die das zweite Volumen definiert, vier Ansätze (24) beinhaltet, die sich paarweise beiderseits der Sagittalebene und der Stirnebene der Schale (20) erstrecken und auf denen ein Haltegitter (25) des aufzubrühenden Produkts aufliegt.

14. Vorrichtung nach Anspruch 13, **dadurch gekennzeichnet, dass** sie Mittel zum Blockieren des Haltegitters (25) beinhaltet.

15. Vorrichtung nach Anspruch 14, **dadurch gekennzeichnet, dass** die Blockiermittel aus einer Klinge oder einem gebogenen flexiblen Strang (26) bestehen, von dem ein erstes Ende fest mit der Schale (19), die das erste Volumen definiert, verbunden ist oder darauf aufliegt, wenn die Schalen (19, 20) zusammengesetzt sind, und dessen gegenüberliegendes Ende am Haltegitter (25) aufliegt oder fest damit verbunden ist.

## Claims

1. A device for preparing a hot or cold beverage, by infusion of a product in water, comprising at least one water supply, heating means (6) for heating the water and an infuser (19, 20) capable of receiving a determined volume of water, said infuser (19, 20) comprising at least retaining means (24, 25) for retaining the product to be infused, means (22) for discharging the infusion, two distinct volumes, a first volume called heating volume and a second volume called retaining and infusing volume in which the retaining means (24, 25) extend, said infuser (19, 20) being able to be driven in movement by means of a motor (9), **characterized in that** said infuser (19, 20) consists of two shells, a first shell (19) defining the first volume and a second shell (20) defining the second volume, open and whose openings extend one in line with the other.

2. The device according to claim 1 **characterized in that** the peripheral edges of the shells (19, 20) defining the first and second volumes are not in contact and are separated by a determined space.

3. The device according to claim 2 **characterized in that** said determined space is less than or equal to 5 mm.

4. The device according to claim 3 **characterized in that** said determined space is less than or equal to 2 mm.

5. The device according to any one of claims 1 to 4 **characterized in that** the discharging means (22) are positioned between the two shells (19, 20).

6. The device according to claim 5 **characterized in that** said discharging means (22) consist of a hollow (22) positioned on the peripheral edge of the shell (20) defining the second volume.

7. The device according to any one of claims 1 to 6 **characterized in that** said shells (19, 20) have a substantially parallelepiped shape.

8. The device according to claim 7 **characterized in that** the shell (19) forming the first so-called heating volume is in the form of a cover.

9. The device according to any one of claims 1 to 8 **characterized in that** the heating means (6) consist of a boiler (6) comprising at least one body (28) open at its upper end, a thermal resistance (30), a water supply pipe (31), a discharge pipe (32) and a soft and elastic membrane (34) closing the upper end of the body (28) of the boiler (6) whose lower end is closed.

10. The device according to claim 9 **characterized in that** the heating means (6) comprise a second soft and elastic membrane (36) capping the first membrane (34).

11. The device according to claim 10 **characterized in that** the heating means (6) comprise, between the first soft and elastic membrane (34) and the second soft and elastic membrane (36), so-called lubricating and/or insulating means allowing to avoid an adhesion between the two membranes (34, 36) and to provide a relative sliding between said membranes (34, 36).

12. The device according to any one of claims 1 to 11 **characterized in that** the shell (19) defining the first volume includes at least one blister or a wall (23) inclined towards the shell (20) defining the second volume and provided with a central opening at its lower end.

13. The device according to any one of claims 1 to 12 **characterized in that** the shell (20) defining the second volume includes four shoulders (24) extending, in pairs, on either side of the sagittal plane and of the frontal plane of the shell (20) and on which a retaining grid (25) for retaining the product to be infused rests.

14. The device according to claim 13 **characterized in that** it includes means for blocking the retaining grid (25).

15. The device according to claim 14 **characterized in that** said blocking means consist of a blade or a curved flexible rope (26), a first end of which is secured to or rests on the shell (19) defining the first volume, when the shells (19, 20) are assembled, and the opposite end of which rests on or is secured to the retaining grid (25).
